Europäisches Patentamt

**European Patent Office**

Office européen des brevets

(19)

(11) Publication number: **0 025 249**
**B1**

# EUROPEAN PATENT SPECIFICATION

(12)

(45) Date of publication of patent specification: **04.01.84**

(21) Application number: **80200822.7**

(22) Date of filing: **29.08.80**

(51) Int. Cl.³: **A 01 D 67/00,**
**A 01 B 59/046,**
**B 62 D 49/06**

(54) Tractor with a built-on underframe for a tilling machine with arm.

(30) Priority: **07.09.79 BE 58054**

(43) Date of publication of application:
**18.03.81 Bulletin 81/11**

(45) Publication of the grant of the patent:
**04.01.84 Bulletin 84/1**

(84) Designated Contracting States:
**AT CH DE FR GB IT LI LU NL SE**

(56) References cited:
**BE - A - 871 868**
**CH - A - 387 364**
**GB - A - 757 460**
**US - A - 2 707 643**
**US - A - 2 749 995**

(73) Proprietor: **Thomas, Joris Jan**
**Brusselsesteenweg 134**
**B-1880 Merchtem (BE)**

(72) Inventor: **Thomas, Joris Jan**
**Brusselsesteenweg 134**
**B-1880 Merchtem (BE)**

(74) Representative: **De Rycker, Rudolf, Ir. et al,**
**Vereenigde Octrooibureaux Belgie S.A.**
**Charlottalei 48**
**B-2018 Antwerpen (BE)**

Courier Press, Leamington Spa, England.

## Tractor with a built-on underframe for a tilling machine with arm.

This invention relates to a tractor with a built-on underframe for a tilling machine with arm for carrying an implement at its end, which underframe has a back part which extends behind the tractor, in the tractor cross-wise direction and is fastened to the tractor back side, and a sidewise part which extends along the one tractor side, the back end of this part connecting to the back part and the front end thereof extending, adjacent to the tractor engine, towards said tractor and being fastened to the tractor with a hinged connection which lets said part tilt about an axis which runs front to back with respect to the tractor, which underframe further comprises means for mounting the tilling machine arm on said sidewise part swingable about a substantially vertical axis relative to the underframe, and a wheel which is mounted on said sidewise part and with which said part can bear on the ground.

In tractors with such an underframe, the swinging arm of the tilling machine is foldable, the arm movements being controlled by hydraulic pneumatic piston mechanisms.

While said arm is removably or not fastened to said underframe, the implement proper is generally removably made fast to the arm, in such a way that various implements can be mounted succeedingly on one and the same arm.

Such implements are a pull shovel, a ditcher beam, a knife mower, a mowing basket, a beater harvester, a slope rake or a brush.

A tractor of this kind is known from BE—A—871 868.

The underframe back part is mounted on the two draft links of the hitch mechanism with which a tractor is usually provided for on its rear end. The two draft links are pivotably connected to the tractor body and can be raised or lowered by means of two power-operated drop links. The drop links and the draft links are connected to each other by means of a slot-and-pin-connection in such a way that, when the links are in the lowest position, the draft links can be individually raised over a limited height with respect to the corresponding drop link. The sidewise part of the underframe consists of two parts, this is a back beam and a front bar, the means for mounting the tilling machine arm being mounted between this beam and this bar. The back beam is rigidly fast to the back part of the underframe. The front bar is hingedly fastened, by means of pins which extend horizontally and perpendicularly to the bar longitudinal direction, to the means for mounting the tilling machine arm on the one hand and to the tractor, near its front end, on the other hand. This construction prevents height stress in the underframe and in the connection of it to the tractor as the underframe, of which both the sidewise part and the back part bear with a wheel on the ground, can tilt somewhat with respect to the tractor. The hinged connections of the front bar of the underframe to the tractor and to the means for mounting the tilling machine arm have enough play not to prevent this tilting. The underframe can thus float on the ground.

Such mounting of the underframe on the tractor could be satisfactory with an implement mounted directly and stationary on the underframe, the centre of gravity lying always between the tractor and a support wheel, which wheel can be the wheel bearing the sidewise part of the underframe or an additional wheel forming part of the implement.

Such mounting of the underframe is however not satisfactory when a tilling machine with a pivoting arm carrying an implement at its end is mounted on the underframe.

The implement is used beside or behind the whole formed by the tractor and the underframe so that, when the implement is in use, the resultant of the forces acting through the tilling machine with arm on the underframe applies on a point outside said whole. As both draft links can raise somewhat individually, this will result in an uncontrolled tilting of the underframe with respect to the tractor. To avoid this uncontrolled tilting as a result of a burden acting on the arm with implement on the outside of the whole formed by the underframe and the tractor, without completely preventing any tilting of the underframe with respect to the tractor when the tractor and the underframe are moved on rough ground, the tractor according to BE—A—871 868 comprises a complicate hydraulic mechanism mounted between the tractor rear end and the underframe.

The two draft links of the tractor hitch mechanism can also easily be damaged so that the forces the implement may exert on the underframe through the intermediary of the tilling machine arm are very limited.

The underframe has also to be especially adapted to a certain type of tractor as the front end of the front bar of the underframe is adjustable neither in the lengthwise nor in the crosswise direction of the tractor.

The invention has for object to obviate said drawbacks and to provide a tractor with a built-on underframe for a pivoting tilling machine with arm permitting a tilting of the underframe with respect to the tractor when moving on rough ground but preventing an uncontrolled tilting due to forces acting on the arm with implement, which forces can be very strong without danger of damaging the coupling between the underframe and the tractor and without danger of lifting the tractor off the ground, while said coupling can be very simple and does not need a complicated hydraulic mechanism and while said underframe can be easily coupled to or uncoupled from various types of tractors.

For this purpose the back part of the underframe is fastened but in one location on the tractor back side independently from the power-actuated lifting arm of the hitch mechanism on the tractor rear end, and actually with a hinged connection which lets said part tilt relative to the tractor about an axis which extends front to back with respect to the tractor, in such a way that the complete underframe can tilt relative to the tractor about both said hinged connections, and the sidewise part is comprised of three parts, namely a part which is fast to the back part and which carries the means for mounting the tilling machine arm, an extension piece which is hingedly fastened to the last mentioned part about an axis extending in the height direction of the tractor, and a connection piece which is hingedly fastened to the extension piece about an axis extending in the height direction of the tractor, said tractor being provided with means to lock the extension piece and the connection piece in at least one position relative to one another.

The underframe can tilt with respect to the tractor to prevent a large turning moment in the underframe or in the fastening thereof to the tractor when moving on rough ground. However the tractor will not easily tilt when a heavy positive or negative burden is acting on the pivoting arm, the tractor forming a counterweight to this burden. Due to the sidewise part of the underframe consisting of three parts hingedly connected together about vertical axes, the location of the front end of this sidewise part can be adjusted and the underframe can be mounted on various types of tractors. The mounting of the underframe on the tractor and the removing of the tractor from the underframe is very easy. Once the underframe is coupled to the tractor, the extension piece and the connection piece of the sidewise part are locked in a relative position to one another and the underframe acts as a rigid whole.

From GB—A—757 460 it is known to connect the back part of the underframe to the back part of the tractor in one location, independently from the hitch mechanism arms and pivotably in all directions, by means of an eye bolt mounted on the underframe and a hook, pivotably secured to the tractor. As the front end of the sidewise part of the underframe is hingedly connected to the tractor about an axis extending front to back with respect to the tractor, the whole underframe can also tilt about an axis extending front to back with respect to the tractor.

The underframe does however not comprise means for mounting a tilling machine arm pivotably about a substantially vertical axis relative to the underframe. The underframe carries an implement such as a combine, a forage harvester, a baler or a corn picker. These implements are not pivotably mounted on the underframe. No important external forces act on the implement and the underframe has only to carry the own weight of the implement. The gravity centre of the implement is always between the tractor and the wheel supporting the underframe. As already mentioned hereabove, with implements of this kind, the hingedly mounting of the underframe on the tractor does not raise any problem. The underframe will not tilt more than is necessary to permit the implement to float over the ground and there is no danger that the tractor is lifted off the ground by the underframe.

Moreover said underframe is made as a rigid whole so that it is only usable or a determined type of tractor. As the front end of the underframe is not laterally movable with respect to the rest of the underframe, the tractor has to be moved laterally with respect to the underframe when mounting the underframe on a tractor or removing the tractor from the underframe what requires some driving skill.

In a particular embodiment of the invention the hinged connection of the underframe back part is made fast to the center point from the three-point lift of the tractor.

Other details and advantages of the invention will stand out from the following description of a tractor with a built-on underframe for a tilling machine with arm, according to the invention; this description is only given by way of example and does not limit the invention; the reference numerals pertain to the accompanying drawings, in which:

Figure 1 is a top view of a tractor with a built-on underframe for a tilling machine with arm according to the invention.

Figure 2 is a back view of the underframe from the tractor as shown in figure 1.

Figure 3 shows a detail from the top view of the tractor in figure 1, on a larger scale.

Figure 4 shows a cross section along line IV—IV in figure 3.

Figure 5 shows another detail from the top view in figure 1, also on a larger scale.

Figure 6 is a side view of the detail shown in figure 5.

In the various figures, the same reference numerals pertain to similar elements.

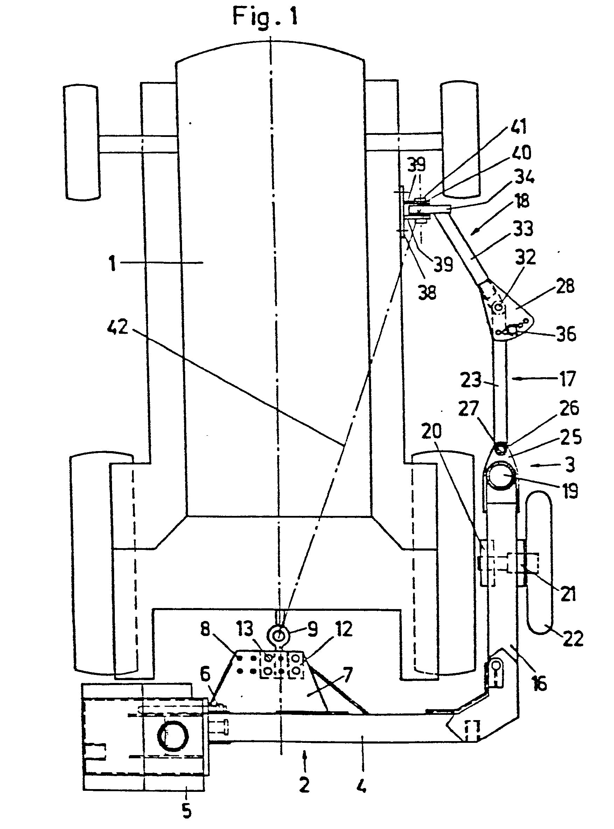

The tractor 1 according to figure 1 is of a structure known per se. Said tractor is consequently shown but diagrammatically in the figures and will not be described in detail hereinafter.

On said tractor is built-on an underframe which is mainly comprised of a back part 2 and a sidewise part 3. Said underframe is designed to bear an arm which is foldable by means of hydraulic piston mechanisms, said arm being part of a tilling machine which is available commercially per se and has not been shown in the drawings for the sake of clearness.

The back part 2 from underframe 2, 3 comprises essentially a hollow metal beam 4 with square cross-section which runs cross-wise to the tractor. The one end of said beam 4 is rigidly connected to the sidewise part 3. The other end of said beam 4 connects to an oil tank 5 to which the hydraulic piston operators from the tilling machine can be connected by means of hoses. For the sake of clearness the hoses have not been shown in the figures. Said oil tank 5 is provided with a manifold 6 for the fastening of said hoses.

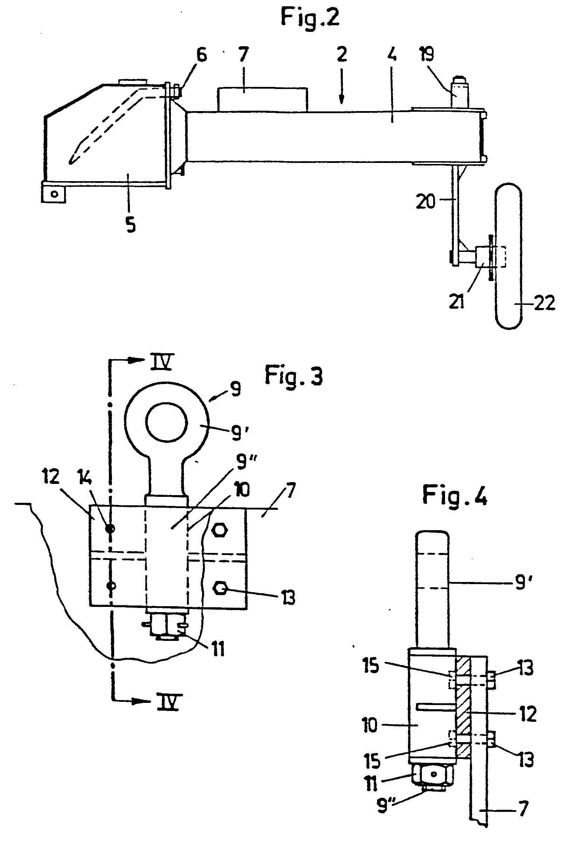

Between part 3 and oil tank 5, a flange 7 projecting towards tractor 1 is welded to the top side of beam 4. Said flange 7 is provided with openings 8. To said flange 7 is hingedly fastened an eye-bolt 9. Said eye-bolt 9 is rotatingly fitted with the shank 9″ thereof in a bush 10. An overthickness on the shank on the one side of bush 10 and a nut 11 which is screwed on the other side of bush 10, on the shank end prevent the shank 9″ of eye-bolt 9 sliding inside bush 10. Said bush 10 is welded to a flange 12. Said flange 12 as it appears mostly from figures 3 and 4, is made fast by means of four screw-bolts 13 passing through openings 14 in flange 12 and through four openings 8 in flange 7 and on which nuts 15 are screwed, against the bottom side of flange 7, in such a way that the eye 9′ proper projects outside flange 7 on the side of tractor 1. The eye 9′ proper is then made fast by means of a screw-bolt or pin to the center point from the three-point lift of tractor 1. These four openings 8 through which pass bolts 13 are so selected that the sidewise part 3 lies as close as possible to the side wall of tractor 1. The shank 9″ from eye-bolt 9 forms a hinging axis about which beam 4 can tilt relative to the back side of tractor 1. Said hinging axis runs in the lengthwise direction of tractor 1, that is at right angle to the lengthwise direction of beam 4 and in parallel relationship with the ground the tractor 1 runs on.

Said sidewise part 3 is mainly comprised of three parts, namely a beam 16 which is integral at the back side with beam 4 from the back part 2 and which runs in parallel relationship with the lengthwise axis of tractor 1, an extension piece 17 which runs substantially in the extension of beam 16 and which connects with the back end thereof to the front end of beam 16, and a connecting piece 18 which runs from the front end of extension piece 17 at an angle up to tractor 1.

Said beam 16 bears next to the front end thereof, on the top side thereof, a bearing 19 for the arm from the tilling machine to be mounted on underframe 2, 3. Said bearing 19 allows in a way known per se, a fast coupling of the arm with the underframe 2, 3, in such a way that said arm is not only rotatably mounted on beam 16, but is also removable and easily replaceable thereon. Said beam 16 further bears between the bearing 19 and the back end thereof, on the bottom side, an arm 20 running thereunder. To the lowermost end of arm 20 is made fast a wheel bearing 21 on which bears a wheel 22. With said wheel 22 beam 16 and thus the complete underframe 2, 3 bears on the ground. Said wheel 22 forms actually the single direct support on the ground for underframe 2, 3.

The extension piece 17 comprises a hollow flat beam 23 to both ends of which is welded a cylinder 24. The axis of cylinder 24 runs at right angle to the lengthwise direction of beam 23. Said extension piece 17 is arranged with the lengthwise axes of cylinders 24 approximately vertical. With that cylinder 24 on the back end thereof, said extension piece 17 projects between both legs 25 from a fork which forms the front end of beam 16. Both said legs are each provided with an opening 26. The extension piece 17 is connected to beam 16 by a pin 27 the ends of which are provided with an overthickness and which fits through said openings 26 in legs 25 and said latter cylinder 24.

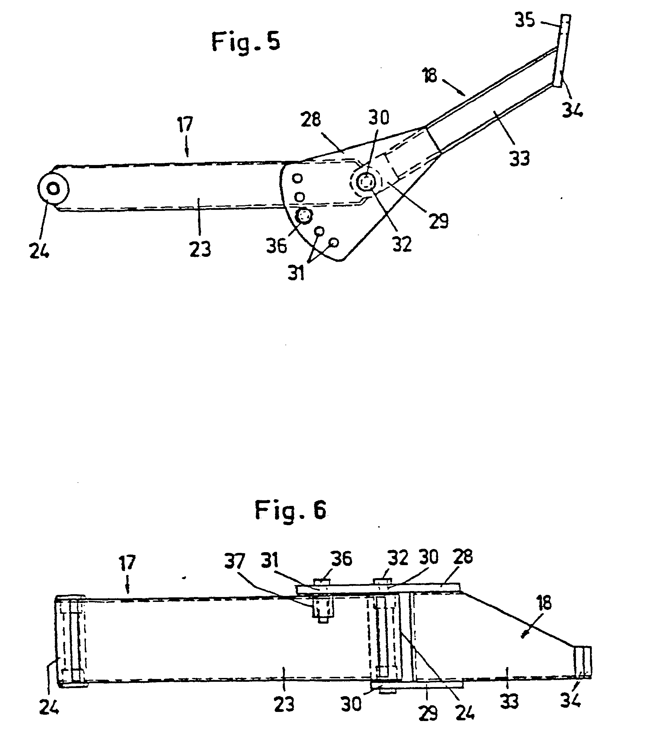

As it is clear from figures 5 and 6 wherein extension piece 17 and connecting piece 18 only have been shown, said extension piece 17 is connected to connecting piece 18 in the same way as described above. Said connecting piece 18 then also comprises a forked end. Both fork legs are shown in 28 and 29 in the figures, whereby however top leg is not only substantially longer than bottom leg 29, but also fans out wide. An opening 30 is provided facing one another in both legs 28 and 29, while in top leg 28 some five openings 31 are provided on a circle which is concentric to opening 30. With that cylinder 24 at the front thereof, the extension piece 17 projects between both legs 28 and 29 and a pin 32 the ends of which have an overthickness, passes through the openings 30 in legs 28 and 29 and through said latter cylinder 24.

To that forked end formed by legs 28 and 29 connects a hollow flat beam 33 which is chamfered on the front side and the top side. Said extension piece 17 finally comprises on the front side of flat beam 33, a fastening plate 34 welded thereto. Said plate 34 extends at right angle on legs 28 and 29 but forms an angle with the lengthwise direction of connecting piece 18. Plate 34 projects with a portion thereof outside beam 33. Said latter portion is provided with an opening 35.

By means of fastening plate 34, the connecting piece 18 and thus the front end of underframe 2, 3 is made fast approximately in the location of the engine from tractor 1, to the frame which bears said engine. As the tractor 1 is markedly smaller adjacent the engine than adjacent the rear wheels, the front end of connecting piece 18 lies closer to the tractor lengthwise axis than the beam 16 located adjacent the rear wheels of tractor 1.

The extension piece 17 and the connecting piece 18, which are normally hinged relative to one another about pin 32, are made fast to one another at an angle in such a way that extension piece 17 lies substantially in the extension of beam 16 and thus but connecting piece 18 runs at an angle relative to the lengthwise direction of tractor 1. Such positive fastening at an angle to one another of extension piece 17 and connecting piece 18 is obtained by means of a removable pin 36 which has an enlarged head and which passes through one opening 31 and through a sleeve 37 welded to the side wall of hollow beam 23. According to that opening 31 which is selected, it is possible to adjust the angle formed between extension piece 17 and connecting piece 18, in such a way thus that underframe 2, 3 can be fitted to tractor 1 and thus whatever the model of tractor 1, the front end of connecting piece 18 can be brought against the tractor.

To enable fastening said front end formed by fastening plate 34 from connecting piece 18, a fastening piece comprised of a base 38 and two legs 39 standing at right angle thereon, is made fast to the tractor frame. Said legs 39 are directed at right angle to the lengthwise direction of tractor 1 and run in parallel relationship with the ground. Each leg 39 is provided with an opening 40. The fastening plate 34 of connecting piece 38 fits exactly between both legs 39. The fastening is obtained by means of a pin 41 which passes through the openings 40 in both legs 39 and through the opening 35 in fastening plate 34. Said pin 41 forms a hinging axis about which the connecting piece 18 and thus the complete underframe 2, 3 can tile relative to tractor 1. Said hinging axis runs in the lengthwise direction of tractor 1 in parallel relationship with the ground.

Actually thus said underframe 2, 3 is hingedly connected by two hinging axes, namely eye-bolt 9 and pin 41, respectively to the back side and the front side of the tractor. Both said hinging axes run in parallel relationship with the tractor lengthwise axis and the ground, but they lie strictly speaking not in the extension of one another. The sidewise spacing between both hinging axes is however markedly smaller than the spacing thereof as considered in the lengthwise direction of tractor 1, in such a way that one may consider that said axes form by approximation a single hinging axis which runs substantially in the lengthwise direction of tractor 1 and about which thus the complete underframe 2, 3 is swingable relative to the tractor. Thus when bearing wheel 22 comes to lie higher or lower than the supporting plane of the wheels of tractor 1, the complete underframe 2, 3 can tilt somewhat relative to tractor 1 and thus said supporting plane thereof. The small side difference relative to one another of those hinging axes formed by eye-bolt 9 and pin 41 is easily balanced due to the connections between beam 16, extension piece 17, connecting piece 18 and fastening piece 38, 39 not being rigid but rather allowing some play.

Besides, the hinge axes formed by eye-bolt 9 and pin 41 do not have necessarily to be directed along the tractor lengthwise direction. They might also lie in the extension of one another, that is along the connecting line 42 or take any direction which lies between said line 42 and the lengthwise direction of tractor 1. The closer the line 42 lies to the tractor lengthwise direction, the better.

By means of the above-described structure, no large turning moments are generated in the underframe 2, 3 or in the connections between said underframe 2, 3 and the tractor 1 even on rough ground.

## Claims

1. Tractor (1) with a built-on underframe (2, 3) for a tilling machine with a pivoting arm for carrying an implement at its end, which underframe (2, 3) has a back part (2) which extends behind the tractor (1), in the tractor cross-wise direction and is fastened to the tractor back side, and a sidewise part (3) which extends along the one tractor side, the back end of this part (3) connecting to the back part (2) and the front end (18) thereof extending, adjacent to the tractor (1) engine, towards said tractor (1) and being fastened to the tractor (1) with a hinged connection (34, 35 and 38 to 41) which lets said part tilt about an axis which runs front to back with respect to the tractor (1), which underframe (2, 3) further comprises means (19) for mounting the tilling machine arm on said sidewise part (3) swingable about a substantially vertical axis relative to the underframe (2, 3) and a wheel (22) which is mounted on said sidewise part (3) and with which said part (3) can bear on the ground, characterized in that the back part (2) of the underframe (2, 3) is fastened but in one location on the tractor (1) back side independently from the power-actuated lifting arms of the hitch mechanism on the tractor rear end and actually with a hinged connection (7 to 15) which lets said part tilt relative to the tractor (1) about an axis (11) which extends front to back with respect to the tractor (1), in such a way that the complete underframe (2, 3) can tilt relative to the tractor (1) about both said hinged connections (7 to 15 and 34, 35, 38 to 41), and in that the sidewise part (3) is comprised of three parts (16, 17 and 18), namely a part (16) which is fast to the back part (2) and which carries the means (19) for mounting the tilling machine arm, an extension piece (17) which is hingedly fastened to the last mentioned part (16) about an axis extending in the height direction of the tractor (1), and a connection piece (18) which is hingedly fastened to the extension piece (17) about an axis extending in the height direction of the tractor (1), said tractor (1) being provided with means (28, 31, 36, 37) to lock the extension piece (17) and the connection piece (18) in at least one position relative to one another.

2. Tractor (1) as defined in the preceding claim, characterized in that the hinged connection (7 to 15) of the underframe back part (2) to the tractor (1) back part comprises an eye-bolt (9) to the shank (9″) of which is rotatably mounted in a bush (10) mounted on the underframe back part (2) and the eye (9) of which is attached to the tractor back part.

3. Tractor (1) as defined in either one of the preceding claims, characterized in that the hinged connection (7 to 15) of the underframe back part (2) is made fast to the center point from the three-point lift of the tractor.

## Revendications

1. Tracteur (1) auquel est attelé un châssis auxiliaire (2, 3) pour une machine de labour ayant un bras pivotant destiné à porter un outil à son extrémité, châssis auxiliaire (2, 3) qui possède une partie arrière (2) qui s'étend derrière le tracteur (1), suivant la direction transversale du tracteur et est fixée au dos du tracteur, et une partie latérale (3) qui s'étend le long d'un côté du tracteur, l'extrémité arrière de cette partie (3) étant reliée à la partie arrière (2) et son extrémité avant (18) s'étendant au voisinage du moteur du tracteur (1), vers ce tracteur (1) et étant fixée au tracteur (1) par une liaison articulée (34, 35 et 38 à 41) qui permet à ladite partie de basculer autour d'un axe qui s'étend de l'avant vers l'arrière par rapport au tracteur (1), châssis auxiliaire (2, 3) qui comprend en outre des moyens (19) pour monter le bras de machine de labour sur ladite partie latérale (3) à pivotement autour d'un axe pratiquement vertical par rapport au châssis auxiliaire (2, 3), et une roue (22) qui est montée sur ladite partie latérale (3) et avec laquelle cette partie (3) peut porter sur le sol, caractérisé en ce qua la partie arrière (2) du châssis auxiliaire (2, 3) n'est fixée qu'en un endroit sur le côté arrière du tracteur (1) indépendamment des bras de levage motorisé du mécanisme de levage sur l'extrémité arrière du tracteur et en fait avec une liaison articulée (7 à 15) qui permet à ladite partie de basculer par rapport au tracteur (1) autour d'une axe (11) qui s'étend d'avant en arrière par rapport au tracteur (1), de telle sorte que le châssis auxiliaire (2, 3) complet peut basculer par rapport au tracteur (1) autour desdites deux liaisons articulées (7 à 15 et 34, 35, 38 à 41), et en ce que la partie latérale (3) est constituée par trois parties (16, 17 et 18), à savoir une partie (16) qui est solidaire de la partie arrière (2) et qui porte les moyens (19) pour le montage du bras de machine de labour, un prolongement (17) qui est fixé de façon articulée à la dernière partie précitée (16) autour d'un axe s'étendant suivant la direction en hauteur du tracteur (1), et une pièce de liaison (18) qui est fixée de façon articulée au prolongement (17) autour d'un axe s'étendant suivant la direction en hauteur du tracteur (1), ledit tracteur (1) étant doté de moyens (28, 31, 36, 37) pour verrouiller le prolongement (17) et la pièce de liaison (18) en au moins une position l'un par rapport à l'autre.

2. Tracteur (1) suivant la revendication précédente, caractérisé en ce que la liaison articulée (7 à 15) de la partie arrière (2) du châssis auxiliaire avec la partie arrière du tracteur (1) comprend un tire-fond (9) dont la tige (9″) est montée à rotation dans un manchon (10) monté sur la partie arrière (2) du châssis auxiliaire et dont l'oeillet (9) est fixé à la partie arrière du tracteur.

3. Tracteur (1) suivant l'une ou l'autre des revendications précédentes, caractérisé en ce que la liaison articulée (7 à 15) de la partie arrière (2) du châssis auxiliaire est rendue solidaire du point central de l'élévateur à trois points du tracteur.

## Patentansprüche

1. Schlepper (1) mit angehängtem Geräteträger (2, 3) für eine Bearbeitungsmaschine mit einem zum Tragen eines Gerätes an seinem Ende dienenden Ausleger, wobei dieser Geräteträger (2, 3) einen sich hinter dem Schlepper (1) in dessen Querrichtung erstreckenden und an der Hinterseite desselben befestigten Hinterteil (2) aufweist, sowie mit einem sich längs der einen Seite des Schleppers erstreckenden Seitenteil (3) versehen ist, dessen Hinterende Mit dem vorgenannten Hinterteil (2) verbunden ist und Vorderende (18) sich in der Nähe vom Motor des Schleppers (1) nach dem Schlepper hinzu erstreckt und mittels eines Gelenkmechanismus (34, 35 und 38 bis 41) am Schlepper (1) angelenkt ist, derart, dass der letztgenannte Seitenteil um eine sich von der Vorderseite bis zur Hinterseite erstreckende Achse in bezug auf den Schlepper (1) schwenken kann, wobei der Geräteträger (2, 3) ausserdem mit Mitteln (19) für eine derartige Anlenkung des Auslegers der Maschine am vorgenannten Seitenteil (3) versehen ist, dass er um eine sich praktisch senkrecht zum Geräteträger (2, 3) erstreckende Achse schwenken kann, und überdies mit einem auf dem vorgenannnten Seitenteil (3) angeordneten Rad (22) ausgestattet ist, womit dieser Seitenteil (3) auf dem Boden ruhen kann, dadurch gekennzeichnet, dass der Hinterteil (2) des Geräteträgers (2, 3) lediglich an einer einzigen Stelle an der Hinterseite des Schleppers (1) befestigt ist, unabhängig von den angetriebenen Hebearmen der Verbindungsvorrichtung an der Hinterseite des Schleppers, und nämlich mit einem Gelenkmechanismus (7 bis 15), der die Schwenkung des betreffenden Teiles in bezug auf den Schlepper (1) um eine von der Vorderseite nach der Hinterseite desselben laufende Achse (11) ermöglicht, derart dass der Gesamtgeräteträger (2, 3) in bezug auf den Schlepper (1) um die beiden vorgenannten Gelenkmechanismus (7 bis 15 und 34, 35, 38 bis 41) schwenken kann, und dass der Seitenteil (3) aus drei Teilen (16, 17 und 18) besteht, und zwar aus einem an Hinterteil (2) befestigten und die Vorrichtung für das Anlenken des Auslegers tragenden Teil (16), einem am letztgenannten Teil (16) ange-

**0 025 249**

lenkten, um eine in der Höherichtung des Schleppers (1) angeordnete Achse schwenkenden Verlängerungsstück (17) und einem am vorgenannten Verlängerungsstück (17) angelenkten und um eine sich in der Höherichtung des Schleppers erstreckende Achse schwenkenden Verbindungsstück (18), wobei der Schlepper (1) mit Mitteln (28, 31, 36, 37) zum Verreigeln des Verlängerungsstückes (17) und Verbindungsstückes (18) in wenigstens einer gegenseitigen Lage versehen ist.

2. Schlepper (1) gemäss dem vorhergehenden Anspruch 1, dadurch gekennzeichnet, dass die gelenkige Kupplung (7 bis 15) zwischen dem Hinterteil (2) des Geräteträgers und der Hinterseite des Schleppers (1) einen Augenbolzen (9) aufweist, dessen Stiel (9″) drehbar in einer auf dem Hinterteil (2) des Geräteträgers montierten Büchse (10) angeordnet ist und der mit seinem Auge (9) mit dem Hinterteil des Schleppers verbunden ist.

3. Schlepper (1) gemäss irgendeinem der vorhergehenden Ansprüche, dadurch gekennzeichnet, dass die gelenkige Kupplung (7 bis 15) des Hinterteiles (2) des Geräteträgers im Mittelpunkt der Dreipunktaufhängung befestigt ist.

0 025 249

Fig. 1

Fig.2

Fig. 3

Fig.4

## Fig. 5

## Fig. 6